# EUROPÄISCHE PATENTANMELDUNG

(11) **EP 0 654 886 A1**
(43) Veröffentlichungstag der Anmeldung: **24.05.1995**
(21) Anmeldenummer: 94203304.4
(22) Anmeldetag: 14.11.1994
(51) Int. Cl.: H02M 3/335

(54) **Schaltungsanordnung zum Erzeugen einer Gleichspannung**

(30) Priorität: 19.11.1993 DE 4339451
(71) Anmelder: Philips Patentverwaltung GmbH, 22335 Hamburg (DE); Philips Electronics N.V., 5621 BA Eindhoven (NL)
(72) Erfinder: Albach, Manfred, Dr., c/o Philips Patentverwaltung, D-20097 Hamburg (DE)
(74) Vertreter: Poddig, Dieter, Dipl.-Ing.

(57) **Zusammenfassung**

Beschrieben wird eine Schaltungsanordnung zum Erzeugen wenigstens einer Ausgangsgleichspannung (an 18, 19) aus einer wenigstens weitgehend sinusförmigen Eingangswechselspannung (an 2, 3) einer ersten Frequenz mit einer ersten Gleichrichteranordnung (1), der die Eingangswechselspannung (an 2, 3) zuführbar ist und der an einem Gleichspannungsausgang (4, 5) eine gleichgerichtete Spannung entnehmbar ist, einer ersten Induktivität (6), einer zweiten Gleichrichteranordnung (7) und einer ersten Siebkapazität (8), die eine in dieser genannten Reihenfolge miteinander verbundene, parallel zum Gleichspannungsausgang (4, 5) angeordnete Reihenschaltung bilden, einem Schaltnetzteil (9) mit zwei Eingangsanschlüssen (10, 11), mit denen es parallel zur ersten Siebkapazität (8) angeordnet ist und zwischen denen es eine Reihenschaltung aus einer zweiten Induktivität (12) und einer Schaltvorrichtung (13) aufweist, die mit einer zweiten Frequenz abwechselnd in den leitenden und in den gesperrten Zustand schaltbar ist und von dem die Ausgangsgleichspannung(en) (an 18, 19) abgebbar ist (sind), sowie einer Steuerkapazität (23), durch die der Verbindungspunkt (22) zwischen der ersten Induktivität (6) und der zweiten Gleichrichteranordnung (7) mit dem Verbindungspunkt (24) zwischen der zweiten Induktivität (12) und der Schaltvorrichtung (13) verknüpft ist,
wobei die erste Induktivität (6) und die Steuerkapazität (23) derart bemessen sind, daß eine dadurch bestimmte Resonanzfrequenz größer als die zweite Frequenz ist und die letztere groß gegen die erste Frequenz gewählt ist.

Dadurch werden mit geringem Bauteileaufwand sowohl der Spannungsanstieg an der Schaltvorrichtung und damit die von dieser ausgehenden, hochfrequenten Störungen als auch die Oberwellen des Netzstroms reduziert.

## Beschreibung

Die Erfindung bezieht sich auf eine Schaltungsanordnung zum Erzeugen wenigstens einer Ausgangsgleichspannung aus einer wenigstens weitgehend sinusförmigen Eingangswechselspannung.

Aus der Monografie "Schaltnetzteile in der Praxis" von Otmar Kilgenstein sind derartige Schaltungsanordnungen im Prinzip bekannt. Darin wird eine sinusförmige Netzwechselspannung zunächst mit Hilfe eines Brückengleichrichters und eines Speicherkondensators in eine Gleichspannung umgewandelt, die dann als Eingangsspannung für ein Schaltnetzteil dient, welches eine oder mehrere Ausgangsgleichspannungen erzeugt. Diese können zur Netzwechselspannung galvanisch getrennt oder mit ihr galvanisch verbunden sein. Ein wesentlicher Nachteil dieser bekannten Schaltungsanordnungen liegt in der Erzeugung elektromagnetischer Störungen sowohl im Bereich der Schaltfrequenzen und ihrer Harmonischen, d.h. also bei relativ hohen Frequenzen, als auch im Bereich der Netzfrequenz, d.h. im Niederfrequenzbereich. Im letzteren macht sich insbesondere eine starke Verzerrung der dem Netz entnommenen Ströme sehr nachteilig bemerkbar.

Ein weiteres Problem, das bei Schaltnetzteilen der vor-stehend erwähnten Art zu beachten ist, besteht im Auftreten von Schaltverlusten am Hochfrequenzschalter des Schaltnetzteils. Diese Schaltverluste, die mit Erhöhung der Schaltfrequenz zunehmen, führen zu einer unzulässigen, thermischen Belastung insbesondere des Hochfrequenzschalters und sind ein Hindernis für eine Erhöhung der Schaltfrequenz über eine durch diese thermische Belastung gegebene Grenze hinaus. Eine Erhöhung der Schaltfrequenz ist aber andererseits für beispielsweise eine Verkleinerung der magnetischen Bauelemente des Schaltnetzteils sehr erwünscht.

Aus der Monografie "Schaltnetzteile" von W. Hirschmann (Firma Siemens) ist es bekannt, zur Reduzierung der Verzerrungen des dem Netz entnommenen Stromes, d.h. zur Reduzierung der Harmonischen der Netzfrequenz in dem dem Netz entnommenen Strom, das Schaltnetzteil unmittelbar an den vom Netz gespeisten Brückengleichrichter ohne einen dazwischen geschalteten Siebkondensator anzuschließen. Durch entsprechende Steuerung der Ein- bzw. Ausschaltzeiten des hochfrequent getakteten Schalters im Schaltnetzteil kann ein wenigstens weitgehend oberwellenfreier, mit der Netzfrequenz sinusförmiger Strom aus dem Netz entnommen werden. Diese Schaltung hat jedoch den Nachteil, daß die von ihr aufgenommene Leistung außer einem konstanten Anteil auch einen mit der doppelten Netzfrequenz schwankenden Anteil enthält. Dies hat zum einen die Konsequenz, daß die Bauelemente der Schaltungsanordnung entsprechend den Schwankungen der aufgenommenen Leistung zwischen dem Wert Null und dem Doppelten der mittleren Ausgangsleistung entsprechend überdimensioniert werden müssen, was zu einer wesentlichen Verteuerung führt. Diese Überdimensionierung macht sich insbesondere bei dem im Schaltnetzteil eingesetzten Transformator bemerkbar. Zum anderen ist der Ausgangsgleichspannung der so ausgelegten Schaltungsanordnung eine Schwingung mit dem Doppelten der Netzfrequenz überlagert. Daher muß in vielen Fällen der Schaltungsanordnung eine weitere Stabilisierungsschaltung nachgeschaltet werden, die einen Linearregler oder einen weiteren Schaltregler umfassen kann. Auch dadurch wird der Schaltungsaufwand stark erhöht.

Aus der EP-B1-0 223 315 ist eine Schaltungsanordnung zur Erzeugung einer Gleichspannung aus einer sinusförmigen Eingangsspannung bekannt, durch die die Störspannungen bei niedrigen Frequenzen verringert werden. Die bekannte Schaltungsanordnung umfaßt dazu ein eine Diode, eine Spule, einen Kondensator und einen Transistor umfassendes Schaltnetzteil, das über einen Gleichrichter mit der im wesentlichen sinusförmigen Eingangsspannung beaufschlagt wird und dessen Elemente so angeordnet sind, daß im leitenden Zustand des Transistors die Diode gesperrt ist und der Spulenstrom zumindest über den Transistor fließt und im gesperrten Zustand über die Diode und eine Parallelschaltung aus einer Last und dem Kondensator. In einem Impulsgenerator werden aus der Eingangsspannung Schaltimpulse für den Transistor erzeugt, deren Frequenz sich zeitlich monoton zwischen einer minimalen Frequenz beim Maximalwert der gleichgerichteten Eingangsspannung und einer maximalen Frequenz beim Minimalwert ändert. Dabei kann die Last ein (weiteres) Schaltnetzteil enthalten, über welches der Endverbraucher gespeist wird. Bei dieser Schaltungsanordnung ist somit ein nicht galvanisch trennendes Schaltnetzteil zwischen den Gleichrichter und den Kondensator geschaltet. Dieses (weitere) Schaltnetzteil ist bevorzugt als Hochsetzsteller ausgebildet, mit dem ein sinusförmiger Strom aus dem Netz entnommen werden kann und der gleichzeitig eine Spannung am Kondensator erzeugt, die höher ist als die Spitze der Netzwechselspannung. Daher kann das nachfolgende Schaltnetzteil innerhalb der Last, welches gegebenenfalls einen Transformator enthält, für die mittlere Ausgangsleistung dimensioniert werden, denn es treten keine Leistungsspitzen mehr auf. Da dieses (weitere) Schaltnetzteil mit einer hohen Eingangsspannung gespeist wird, sind die darin auftretenden Ströme und somit auch die zugehörigen ohmschen Verluste dort relativ gering. Allerdings ist dem somit verringerten Schaltungsaufwand für das (weitere) Schaltnetzteil der zusätzliche Aufwand für den Hochsetzsteller gegenzurechnen, der wie beschrieben im wesentlichen eine Spule, eine Freilaufdiode und einen hochfrequent betriebenen Schalter mit entsprechender Ansteuerschaltung umfaßt.

Aus der DE-OS 35 37 536 oder aus dem Aufsatz "Snubber Circuits: Theory, Design and Application" von Philip C. Todd, veröffentlicht im "Unitrode Switching Regulated Power Supply Design Seminar Manual" vom Mai 1993, sind Dämpfungsglieder (sogenannte Snubber oder voltage clamps) bekannt, mit denen eine verlustbehaftete Dämpfung von Rückschwingimpulsen an Hochfrequenzschaltern vorgenommen werden kann. Derartige Schaltungen sind insbesondere für die Reduzierung von Hochfrequenzstörungen einsetzbar, da sie die Anstiegsgeschwindigkeit der Sperrspannung am Hochfrequenzschalter begrenzen. Je schneller nämlich die Spannung am Hochfrequenzschalter beim Umschalten in den gesperrten Zustand ansteigen kann, desto größer werden die kapazitiven Störströme, die in den stets vorhandenen parasitären Kapazitäten im Umfeld des Hochfrequenzschalters fließen, beispielsweise einem mit einem Kühlkörper verbundenen Anschluß des Hochfequenzschalters und Masse. Werden solche Störungen nicht von vornherein bedämpft, sind zu ihrer Unterdrückung gegebenenfalls aufwendige Netzfilter notwendig. Insbesondere können sich derartige Störungen bei Schaltnetzteilen in Monitoren oder Fernsehgeräten, jedoch auch in anderen, vergleichbar empfindlichen Geräten auswirken, da sie hier z.B. als Bildstörungen sichtbar werden können.

Auch die beschriebenen Dämpfungsglieder stellen jedoch einen zusätzlichen Schaltungsaufwand dar. Besonders hoch wird der Schaltungsaufwand, wenn die beschriebenen, bekannten Maßnahmen zur Unterdrückung der niederfrequenten Störungen und der hochfrequenten Störungen gemeinsam in eine Stromversorgungsschaltung eingesetzt werden müssen.

Die Erfindung hat die Aufgabe, eine Schaltungsanordnung der eingangs genannten Art derart auszubilden, daß mit geringem Schaltungsaufwand einerseits der Spannungsanstieg (d.h. die Anstiegsgeschwindigkeit der Spannung) am Hochfrequenzschalter des Schaltnetzteils und damit Störungen und Schaltverluste bei hohen Frequenzen verringert werden und gleichzeitig ein möglichst weitgehend sinusförmiger Strom aus dem Netz entnommen wird, so daß die Oberwellen dieses Netzstromes und damit die niederfrequenten Störungen durch die Schaltungsanordnung reduziert werden.

Diese Aufgabe wird erfindungsgemäß gelöst durch eine Schaltungsanordnung zum Erzeugen wenigstens einer Ausgangsgleichspannung aus einer wenigstens weitgehend sinusförmigen Eingangswechselspannung einer ersten Frequenz mit einer ersten Gleichrichteranordnung, der die Eingangswechselspannung zuführbar ist und der an einem Gleichspannungsausgang eine gleichgerichtete Spannung entnehmbar ist, einer ersten Induktivität, einer zweiten Gleichrichteranordnung und einer ersten Siebkapazität, die eine in dieser genannten Reihenfolge miteinander verbundene, parallel zum Gleichspannungsausgang angeordnete Reihenschaltung bilden, einem Schaltnetzteil mit zwei Eingangsanschlüssen, mit denen es parallel zur ersten Siebkapazität angeordnet ist und zwischen denen es eine Reihenschaltung aus einer zweiten Induktivität und einer Schaltvorrichtung aufweist, die mit einer zweiten Frequenz abwechselnd in den leitenden und in den gesperrten Zustand schaltbar ist und von dem die Ausgangsgleichspannung(en) abgebbar ist (sind), sowie einer Steuerkapazität, durch die der Verbindungspunkt zwischen der ersten Induktivität und der zweiten Gleichrichteranordnung mit dem Verbindungspunkt zwischen der zweiten Induktivität und der Schaltvorrichtung verknüpft ist, wobei die erste Induktivität und die Steuerkapazität derart bemessen sind, daß eine dadurch bestimmte Resonanzfrequenz größer als die zweite Frequenz ist und die letztere groß gegen die erste Frequenz gewählt ist.

Bei der erfindungsgemäßen Schaltungsanordnung übernimmt die Steuerkapazität sowohl die Funktion des Hochsetzstellers zur Verminderung der niederfrequenten Verzerrungen des Netzstromes als auch die Funktion der Dämpfung der von der Schaltvorrichtung ausgehenden, hochfrequenten Störungen, insbesondere der Dämpfung des Anstiegs der Spannung über der Schaltvorrichtung beim Übergang in den nicht leitenden Zustand. Gegenüber den bekannten, dissipativen Dämpfungsgliedern treten bei der erfindungsgemäßen Schaltungsanordnung auch keine ohmschen Verluste auf, so daß die Erwärmung der Schaltungsanordnung verringert und ihr Wirkungsgrad erhöht werden. Dies wirkt sich auch günstig auf die Dimensionierung der übrigen Bauelemente der erfindungsgemäßen Schaltungsanordnung aus.

Durch die Erfindung wird auch in schaltungstechnisch sehr einfacher Weise das Problem gelöst, daß einerseits das Tastverhältnis der Schaltvorrichtung im Schaltnetzteil durch die von diesem zu übertragende Leistung bestimmt wird, wohingegen im Hochsetzsteller gemäß EP-B1-0 223 315 das Tastverhältnis des darin verwendeten Schalttransistors durch den geforderten, sinusförmigen Netzstrom bestimmt wird und somit einen anderen Verlauf innerhalb der Halbwellen der Netzspannung bzw. des Netzstromes aufweist als das Tastverhältnis der Schaltvorrichtung im Schaltnetzteil. Beispielsweise kann die geforderte Einschaltdauer des Schalttransistors im Hochsetzsteller wesentlich kürzer sein als die Einschaltdauer in der Schaltvorrichtung des anschließenden Schaltnetzteils (in der Last 14 in Fig. 1 der EP-B1-0 223 315). Durch die erfindungsgemäße Schaltungsanordnung wird jedoch nun gewährleistet, daß der Anstieg des Stromes in der ersten Induktivität unabhängig von der Einschaltdauer der Schaltvorrichtung im Schaltnetzteil begrenzt werden kann, da die erste Induktivität nicht unmittelbar an die Schaltvorrichtung angeschlossen ist, sondern mittelbar über die Steuerkapazität. Dies hat zur Folge, daß die maximal von der ersten Induktivität aufzunehmende Energie in jedem hochfrequenten Schaltzyklus der Schaltvorrichtung mit der vorab in der Steuerkapazität gespeicherten Energie gesteuert werden kann. Um nun beide Ziele - den sinusförmigen Netzstrom und die leistungsabhängige Betätigung der Schaltvorrichtung - gleichzeitig mit der erfindungsgemäßen Schaltungsanordnung zu erreichen, muß die Steuerkapazität innerhalb eines hochfrequenten Schaltzyklus der Schaltvorrichtung zwischen einem ersten, positiven Spannungswert und einem zweiten, negativen Spannungswert vollständig umgeladen werden. Durch die Bemessung des zweiten, negativen Spannungswertes kann der Verlauf des Netzstromes im Sinne einer Reduktion niederfrequenter Störungen bzw. Verzerrungen verbessert werden, und mit der Bemessung des ersten, positiven Spannungswertes, der der Spannung an der ersten Siebkapazität entspricht, wird sichergestellt, daß beim Ausschalten der Schaltvorrichtung die Geschwindigkeit des Anstiegs der Spannung über der Schaltvorrichtung auf derart kleine Werte reduziert wird, daß damit einerseits insbesondere die hochfrequenten Störungen verringert und andererseits auch die Schaltverluste reduziert werden.

Die vorgenannte Bedingung wird bei der erfindungsgemäßen Schaltungsanordnung insbesondere durch die beschriebene Bemessung der durch die Steuerkapazität und die erste Induktivität bestimmten Resonanzfrequenz erzielt. Dadurch ist es möglich, daß die Steuerkapazität während eines Bruchteils der Einschaltdauer der Schaltvorrichtung und auch während eines Bruchteils der Ausschaltdauer der Schaltvorrichtung vollständig umgeladen werden kann. Die Umladedauer ist somit nicht an das Tastverhältnis zwischen Einschaltdauer und Ausschaltdauer der Schaltvorrichtung gekoppelt. Somit kann dieses Tastverhältnis unabhängig vom beschriebenen Umladevorgang in der Steuerkapazität und damit bevorzugt gemäß der übertragenen Leistung eingestellt werden.

Durch die völlige Umladung der Steuerkapazität wird außerdem die Anstiegsgeschwindigkeit der Spannung an der Schaltvorrichtung bei deren Übergang in den gesperrten Zustand in der genannten Weise begrenzt.

Die erfindungsgemäße Schaltungsanordnung hat somit den Vorteil, daß sowohl die Schaltverluste als auch die hochfrequenten Störungen bei gleichzeitiger Verringerung der niederfrequenten Verzerrungen des dem Netz entnommenen Stromes verringert werden und daß dafür sowohl die Steuerkapazität als auch die erste Induktivität sehr klein dimensioniert werden können.

Diese Vorteile werden besonders groß, wenn nach einer Weiterbildung der Erfindung die Resonanzfrequenz groß gegenüber der zweiten Frequenz gewählt ist.

Nach einer anderen Weiterbildung der Erfindung kann die zweite Induktivität als Primärwicklung eines wenigstens eine Sekundärwicklung aufweisenden Transformators ausgebildet sein, wobei die Ausgangsgleichspannung(en) aus der (den) Sekundärwicklung(en) ableitbar ist (sind). Mit einer solchen Anordnung ist eine galvanische Trennung zwischen der Eingangswechselspannung und der (den) Ausgangsgleichspannung(en) möglich. Wird eine solche galvanische Trennung nicht verlangt, kann der Transformator auch als Spartransformator ausgebildet sein.

Erfindungsgemäß kann die erste Induktivität sehr klein dimensioniert werden. Vorzugsweise ist sie so klein dimensioniert, daß ein beim Einschalten der Schaltvorrichtung einsetzender Strom durch die erste Induktivität bereits vor dem Beginn des nächsten Wieereinschaltens der Schaltvorrichtung bei deren Betrieb mit einem Wert für die zweite Frequenz, auf den diese für die zur Abgabe mit der (den) Ausgangsgleichspannung(en) vorgesehene Leistung einstellbar ist, wieder abgeklungen ist. Dadurch wird sichergestellt, daß der Strom in der ersten Induktivität so rechtzeitig auf Null absinkt, daß beim Einschalten der Schaltvorrichtung die zweite Gleichrichteranordnung bereits gesperrt ist. Dann können von der ersten Siebkapazität nach Einschalten der Schaltvorrichtung durch diese und die Steuerkapazität keine Rückwärts-Erholströme infolge der noch leitenden zweiten Gleichrichteranordnung fließen.

Somit wird auch durch die kleine Dimensionierung der ersten Induktivität erreicht, daß vorteilhaft die zweite Frequenz proportional zur mit der (den) Ausgangsgleichspannung(en) abgegebenen Leistung einstellbar ist.

Nach einer anderen, vorteilhaften Weiterbildung der Erfindung ist in die Verbindung zwischen der zweiten Gleichrichteranordnung und der ersten Siebkapazität einerseits und dem zugeordneten Eingangsanschluß des Schaltnetzteils andererseits eine dritte Gleichrichteranordnung mit zur zweiten Gleichrichteranordnung übereinstimmender Stromflußrichtung eingefügt. Mit dieser dritten Gleichrichteranordnung kann zusätzlich ein Entladen der Steuerkapazität nach dem Ausschalten der Schaltvorrichtung verhindert werden, nachdem die Steuerkapazität auf den zweiten, negativen Spannungswert aufgeladen ist.

Der zweite, negative Spannungswert an der Steuerkapazität kann durch die zweite Induktivität, die im Fall der Ausbildung des Schaltnetzteils mit einem Transformator durch die Streuinduktivität von dessen Primärwicklung gebildet ist, gesteuert werden. Der Betrag dieses zweiten, negativen Spannungswertes ist größer als die mit dem Übersetzungsverhältnis des Transformators transformierte Ausgangsgleichspannung. Mit diesem zweiten, negativen Spannungswert werden die Harmonischen des niederfrequenten, mit der Eingangswechselspannung zugeführten Stromes sowie die Spannung an der ersten Siebkapazität beeinflußt.

Ist nach dem Ausschalten der Schaltvorrichtung die Energie in der zweiten Induktivität abgebaut, fließt also bei Ausbildung der zweiten Induktivität als Transformator in dessen Sekundärwicklung ebenfalls kein Strom mehr, wird die Spannung an der zweiten Induktivität, d.h. am Transformator, ebenfalls zu Null. Eine Entladung der Steuerkapazität wird jetzt auch durch die dritte Gleichrichteranordnung verhindert. Damit können je nach gewünschter zweiter Frequenz bzw. dem gewünschten Tastverhältnis Lücken im Strom zugelassen werden, d.h. zwischen dem Abklingen z.B. des Stromes in der Sekundärwicklung und dem Wiedereinschalten des Stromes in der zweiten Induktivität kann ein stromloses Zeitintervall eingefügt sein. Damit ist auch ein sogenannter lückender Betrieb möglich. Dies stützt ebenfalls die Verwendbarkeit der erfindungsgemäßen Schaltungsanordnung mit einer beliebigen, d.h. z.B. auch mit einer konstanten, zweiten Frequenz unabhängig von der Ausgangsleistung.

Nach einer anderen Weiterbildung kann die erfindungsgemäße Schaltungsanordnung parallel zur Schaltvorrichtung angeordnet eine Spannungsbegrenzerstufe aufweisen. Diese kann bevorzugt die Gestalt eines der aus dem Stand der Technik bekannten Dämpfungsglieder aufweisen.

Ein Ausführungsbeispiel der erfindungsgemäßen Schaltungsanordnung ist in der Zeichnung dargestellt und wird im nachfolgenden näher beschrieben. Dabei zeigt
Fig. 1 ein Prinzipschaltbild des Ausführungsbeispiels gemäß der Erfindung und
Fig. 2 die zeitlichen Verläufe einiger Ströme und Spannungen in der Schaltungsanordnung nach Fig. 1.

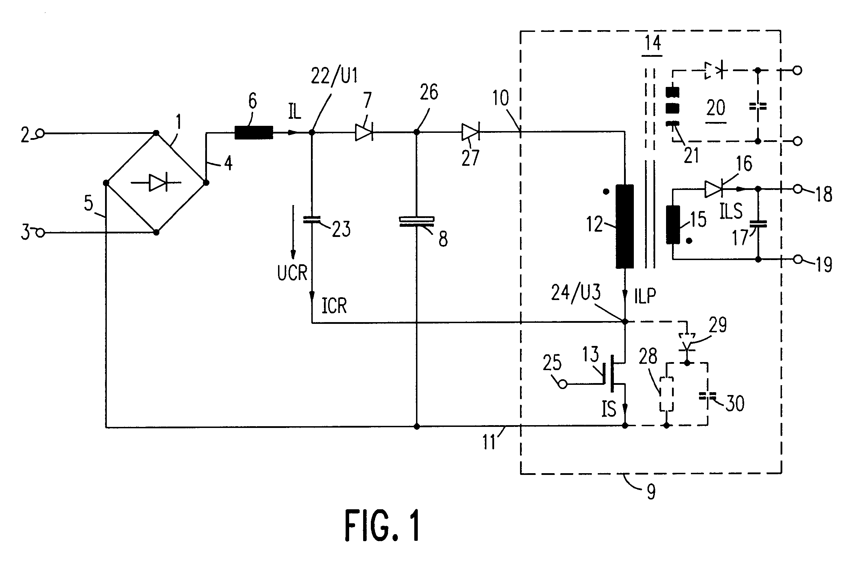

Die Schaltungsanordnung nach Fig. 1 umfaßt eine als Brückengleichrichter ausgebildete, erste Gleichrichteranordnung 1, die mit ihren Wechselspannungsanschlüssen 2, 3 an ein Versorgungsnetz anschließbar ist, aus dem sie mit einer wenigstens weitgehend sinusförmigen Eingangswechselspannung einer ersten Frequenz gespeist wird. An zwei einen Gleichspannungsausgang bildenden Anschlüssen 4, 5 ist eine aus der Eingangswechselspannung gleichgerichtete Spannung entnehmbar. Zwischen den Anschlüssen 4 und 5 des Gleichspannungsausgangs der ersten Gleichrichteranordnung 1 ist an diese eine Reihenschaltung aus einer ersten Induktivität 6, einer eine Freilaufdiode bildenden zweiten Gleichrichteranordnung 7 und einer ersten Siebkapazität 8, die von einem Elektrolytkondensator gebildet ist, angeschlossen, wobei die vorstehend genannten Elemente in der Reihenfolge ihrer Auflistung miteinander verbunden sind und die zweite Gleichrichteranordnung 7 für die gleichgerichtete Spannung an den Anschlüssen 4, 5 in Flußrichtung gepolt ist. Parallel zur ersten Siebkapazität 8 ist ein Schaltnetzteil 9 mit seinen beiden Eingangsanschlüssen 10, 11 angeschlossen. Das Schaltnetzteil 9 umfaßt zwischen seinen Eingangsanschlüssen 10, 11 eine Reihenschaltung aus einer zweiten Induktivität 12 und einer Schaltvorrichtung 13, die in Fig. 1 als Feldeffekttransistor dargestellt ist, jedoch auch von anderer Bauart sein kann. Im vorliegenden Beispiel bildet die zweite Induktivität 12 des Schaltnetzteils 9 die Primärwicklung eines Transformators 14, dessen Sekundärwicklung 15 über eine vierte Gleichrichteranordnung 16 eine zweite Siebkapazität 17 speist, die mit zwei Ausgangsanschlüssen 18, 19 verbunden ist, an denen eine Ausgangsgleichspannung abgegriffen werden kann.

Das vorliegende Ausführungsbeispiel ist vorrangig nur mit einem aus der Sekundärwicklung 15 des Transformators 14, der vierten Gleichrichtranordnung 16 und der zweiten Siebkapazität 17 gebildeten Ausgangskreis dargestellt, kann jedoch auch mit mehreren Ausgangskreisen zum Liefern mehrerer Ausgangsgleichspannungen ausgerüstet sein, wie mit dem gestrichelt gezeichneten, weiteren Ausgangskreis 20 angedeutet ist, der mit einer weiteren Sekundärwicklung 21 des Transformators 14 verbunden ist. Bei dieser Anordnung sind die Ausgangsgleichspannungen von der Eingangswechselspannung galvanisch getrennt. Ist eine solche galvanische Trennung nicht notwendig, kann der Transformator 14 auch als Spartransformator ausgebildet sein.

Der Verbindungspunkt 22 zwischen der ersten Induktivität 6 und der zweiten Gleichrichteranordnung 7 ist über eine Steuerkapazität 23 mit dem Verbindungspunkt 24 zwischen der zweiten Induktivität 12 und der Schaltvorrichtung 13 verknüpft. Diese Steuerkapazität 23 bestimmt mit der ersten Induktivität 6 eine Resonanzfrequenz, die durch entsprechende Dimensionierung der ersten Induktivität 6 und der Steuerkapazität 23 größer als eine zweite Frequenz bemessen ist, mit der über einen Steueranschluß 25 die Schaltvorrichtung 13 durch eine nicht dargestellte Steuerschaltung abwechselnd leitend bzw. gesperrt gesteuert wird. Dabei ist diese zweite Frequenz groß gegen die erste Frequenz der Eingangswechselspannung gewählt. Vorzugsweise wird auch die genannte Resonanzfrequenz groß gegenüber der zweiten Frequenz gewählt, wodurch sowohl die erste Induktivität 6 als auch die Steuerkapazität 23 entsprechend klein dimensioniert werden können. Dies hat außer einer kompakten Bauform auch betriebliche Vorteile, die im nachfolgenden noch erläutert werden.

Zwischen dem Verbindungspunkt 26, in dem die zweite Gleichrichteranordnung 7 mit der ersten Siebkapazität 8 verbunden ist, und dem ersten Eingangsanschluß 10 des Schaltnetzteils 9 ist im Ausführungsbeispiel nach Fig. 1 weiterhin eine dritte Gleichrichteranordnung 27 eingefügt, die beispielsweise ähnlich der zweiten Gleichrichteranordnung 7 (Freilaufdiode) ausgebildet und auch mit übereinstimmender Stromflußrichtung bezüglich eines Stromflusses von der ersten Induktivität 6 zur zweiten Induktivität 12 angeordnet ist.

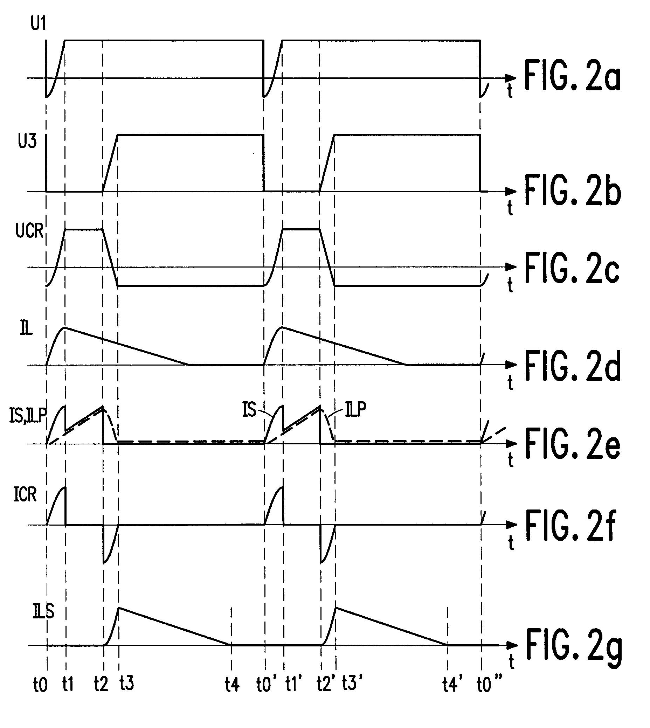

Für ein Betriebsbeispiel der Schaltungsanordnung nach Fig. 1 zeigt Fig. 2 schematisch die zeitlichen Verläufe einiger Ströme und Spannungen. Dabei ist in Fig. 2a) die Spannung U1 am Verbindungspunkt 22, in Fig. 2b) die Spannung U3 am Verbindungspunkt 24 und in Fig. 2c) die Spannung UCR an der Steuerkapazität 23 über der Zeit t aufgetragen. Fig. 2d) zeigt den Strom IL durch die erste Induktivität 6, Fig. 2e) den mit Vollinie gezeichneten Verlauf des Stromes IS durch die Schaltvorrichtung 13 und - gestrichelt gezeichnet - den Verlauf des Stromes ILP durch die zweite Induktivität 12, d.h. die Primärwicklung des Transformators 14. In Fig. 2f) ist der Strom ICR durch die Steuerkapazität 23 und in Fig. 2g) der Strom ILS durch die Sekundärwicklung 15 und die mit ihr verbundene Gleichrichteranordnung 16 über der Zeit t wiedergegeben. Mit diesem Strom ILS wird die Energie aus dem Transformator 14 der zweiten Siebkapazität 17 und damit letztlich den Ausgangsanschlüssen 18, 19 des Schaltnetzteils 9 zugeleitet.

Die Funktion des Ausführungsbeispiels nach Fig. 1 wird jetzt anhand der Diagramme von Fig. 2 beschrieben. Zum Zeitpunkt t0 wird die Schaltvorrichtung 13 in ihren leitenden Zustand geschaltet. Dadurch fließt ein Strom IL vom ersten Wechselspannungsanschluß 2 über die erste Gleichrichteranordnung 1, die erste Induktivität 6, die Steuerkapazität 23, die Schaltvorrichtung 13 und zurück über die erste Gleichrichteranordnung 1 zum zweiten Wechselspannungsanschluß 3. Im ersten Augenblick nach dem Zeitpunkt t0 sind somit die Ströme ICR durch die Steuerkapazität 23 und IS durch die Schaltvorrichtung 13 im wesentlichen mit dem Strom IL durch die erste Induktivität identisch. Die erste Induktivität 6 und die Steuerkapazität 23 bilden hierbei einen Resonanzkreis, so daß der Strom einen sinusförmigen Verlauf annimmt mit einer Frequenz, die durch die Resonanzfrequenz bestimmt wird, die sich aus der Dimensionierung der ersten Induktivität und der Steuerkapazität ergibt. Diese Resonanzfrequenz der ersten Induktivität 6 und der Steuerkapazität 23 ist derart bemessen, daß die Steuerkapazität 23 bis zum Zeitpunkt t1 vollständig umgeladen wird. Der Zeitpunkt t1 liegt dabei aufgrund der relativen Bemessung der vorstehend genannten Resonanzfrequenz und der zweiten Frequenz, mit der die Schaltvorrichtung 13 geschaltet wird, noch innerhalb des Zeitintervalls, in welchem die Schaltvorrichtung 13 in jedem Fall leitend ist. Die Steuerkapazität 23 wird - ausgehend von ihrer Anfangsspannung - positiv aufgeladen. Zum Zeitpunkt t0 nimmt die Spannung UCR an der Steuerkapazität 23 einen negativen Wert an. Infolge der Resonanz mit der ersten Induktivität 6 entsteht an der Steuerkapazität 23 eine Spannungsüberhöhung. Im normalen Betrieb erreicht die Spannung UCR an der Steuerkapazität 23 den Wert der Spannung, auf die die erste Siebkapazität 8 aufgeladen ist. In diesem Augenblick, in dem die Spannung UCR den Wert der Spannung an der ersten Siebkapazität 8 erreicht, wird die zweite Gleichrichteranordnung 7 (Freilaufdiode) leitend und der durch den geschilderten Resonanzvorgang hervorgerufene Strom ICR durch die Steuerkapazität 23 und die Schaltvorrichtung 13 abrupt unterbrochen. In Fig. 2 findet dies zum Zeitpunkt t1 statt. Die inzwischen in der ersten Induktivität 6 gespeicherte Energie entsprechend dem bis dahin aufgebauten Strom IL wird jetzt im weiteren an die erste Siebkapazität 8 abgegeben. Daher nimmt der Strom IL durch die erste Induktivität vom Zeitpunkt t1 an linear ab.

Gleichzeitig findet unabhängig von dem vorstehend beschriebenen Vorgang ein zweiter Vorgang statt. Während der Einschaltdauer der Schaltvorrichtung 13 fließt aus der ersten Siebkapazität 8 ein linear ansteigender Strom ILP durch die zweite Induktivität 12, d.h. durch die Primärwicklung des Transformators 14, und die Schaltvorrichtung 13, ebenfalls beginnend mit dem Zeitpunkt t0. Durch diesen, in Fig. 2e) mit gestrichelter Linie dargestellten Strom wird Energie aus der ersten Siebkapazität entnommen und in dem Transformator 14 gespeichert. Die vierte Gleichrichteranordnung 16 im Ausgangskreis an der Sekundärwicklung 15 des Transformators 14 ist in dieser Zeit stromlos, d.h. der Strom ILS ist Null, vgl. Fig. 2g).

Zum Zeitpunkt t2 wird die Schaltvorrichtung 13 in ihren gesperrten Zustand umgeschaltet, ausgelöst durch ein entsprechendes Signal an ihrem Steueranschluß 25. Im Gegensatz zu den aus dem Stand der Technik bekannten Schaltungsanordnungen steigt die Spannung U3 am Verbindungspunkt 24 und damit über der Schaltvorrichtung 13 jetzt nicht sprungartig an. Die Ursache dafür besteht darin, daß der Strom ILP jetzt statt durch die Schaltvorrichtung 13 vielmehr durch die Steuerkapazität 23 und die zweite Gleichrichteranordnung 7 (Freilaufdiode) sowie die dritte Gleichrichteranordnung 27 fließt. Abhängig von der Größe des Stromes ILP durch die zweite Induktivität 12 zum Zeitpunkt t2 und abhängig von der Größe der Steuerkapazität 23 kann die Spannung UCR nur mit stark begrenzter zeitlicher Änderung abgebaut werden. In den Diagrammen der Fig. 2 geschieht dies im Zeitintervall zwischen den Zeitpunkten t2 und t3. Dieses Betriebsverhalten der erfindungsgemäßen Schaltungsanordnung zieht zwei wesentliche Vorteile nach sich. Zum einen werden wegen des verlangsamten Spannungsanstiegs an der Schaltvorrichtung 13 die in ihr auftreteten Schaltverluste reduziert, zum anderen werden die kapazitiven Störströme - auch als Gleichtaktstörungen bezeichnet - zwischen dem Verbindungspunkt 24 und dem zweiten Eingangsanschluß 11 des Schaltnetzteils 9 stark reduziert; letzteres insbesondere dann, wenn - wie meist üblich - der zweite Eingangsanschluß 11 mit der Gerätemasse verbunden ist und möglicherweise zusätzlich der mit dem Verbindungspunkt 24 verbundene Anschluß der Schaltvorrichtung 13 beispielsweise durch Ausrüstung mit einem Kühlkörper eine große parasitäre Kapazität aufweist. Die in der Streuinduktivität des Trafos 14 gespeicherte Energie wird bei der erfindungsgemäßen Schaltungsanordnung nicht durch (ohmsche) Verluste aufgezehrt, sondern in die Steuerkapazität 23 umgespeichert. Da zu diesem Zeitpunkt die zweite und die vierte Gleichrichteranordnung 7 und 27 leitend sind, entspricht die Spannung an der zweiten Induktivität 12 der Spannung UCR an der Steuerkapazität 23. Erst wenn diese Spannung einen hinreichend großen negativen Wert erreicht hat, wird auch die vierte Gleichrichteranordnung 16 in ihren leitenden Zustand überführt. Die Energie aus dem Transformator 14 wird dann über dessen Sekundärwicklung 15 mittels des Stromes ILS durch die vierte Gleichrichteranordnung 16 in die zweite Siebkapazität 17 übertragen und damit an den Ausgangsanschlüssen 18, 19 verfügbar. Dadurch wird also die Energie im Transformator 14 abgebaut. Der Strom ILS in der Sekundärwicklung 15 nimmt dabei linear ab. Dieser Vorgang findet zwischen den in Fig. 2 mit den Bezugszeichen t3 und t4 bezeichneten Zeitpunkten statt.

Wie auch im Diagramm nach Fig. 2 zwischen den Zeitpunkten t2 und t3 dargestellt ist, wird mit dem Beginn des Stromflusses in der Sekundärwicklung 15, d.h. mit Beginn des Fließens des Stromes ILS, der Strom in der zweiten Induktivität 12, d.h. der Primärwicklung des Transformators 14, nicht abrupt unterbrochen. Vielmehr fließt dieser Strom in der Primärwicklung noch weiter und lädt die Steuerkapazität 23 so lange weiterhin negativ auf, bis die gesamte Energie aus der Streuinduktivität der Primärwicklung des Transformators 14 vollkommen abgebaut, d.h. in die Steuerkapazität 23 umgespeichert ist. Dadurch wird der Betrag des negativen Wertes für die Spannung UCR größer als die auf die Primärseite des Transformators 14 transformierte Ausgangsspannung, d.h. die Ausgangsgleichspannung zwischen den Ausgangsanschlüssen 18 und 19. Um nun die Entladung der Steuerkapazität 23 auf die primärseitige Spannung des Transformators 14 und mit dieser Entladung verbundene Oszillationen zu verhindern, ist die dritte Gleichrichteranordnung 27 eingefügt. Es kann nämlich der Fall eintreten, daß die zweite Gleichrichteranordnung 7 zu diesem Zeitpunkt durch einen noch nicht abgeklungenen Strom IL in der ersten Induktivität 6 noch leitend gehalten wird. Dies ist auch in Fig. 2d) zum Zeitpunkt t3 wiedergegeben. Die dritte Gleichrichteranordnung 27 verhindert an dieser Stelle einen positiven Strom ICR. Bis zum Beginn des nächsten Schaltzyklus der Schaltvorrichtung 13, d.h. bis zum Zeitpunkt t0' in Fig. 2, behält die Steuerkapazität 23 den einmal erreichten, negativen Wert für die Spannung UCR bei.

Zum Zeitpunkt t4 in Fig. 2 wird die vierte Gleichrichteranordnung 16 stromlos, d.h. der Strom ILS ist auf Null abgeklungen. Die Energie aus dem Transformator 14 ist damit vollständig zur zweiten Siebkapazität 17 übertragen. Die Primärwicklung 12 und die Sekundärwicklung 15 des Transformators 14 sind damit spannungslos. Auch jetzt kann sich die Steuerkapazität 23 nicht über die Primärwicklung 12 entladen, da ein solcher Stromfluß durch die dritte Gleichrichteranordnung 27 verhindert wird. Der stromlose Zustand des Transformators 14 kann somit bis zum Beginn der nächsten Schaltperiode zum Zeitpunkt t0' in Fig. 2 beibehalten werden. Die Schaltfrequenz für die Schaltvorrichtung 13, d.h. die vorstehend genannte zweite Frequenz, kann damit frei gewählt werden. Insbesondere kann sie vorteilhaft proportional zur geforderten Ausgangsleistung gewählt werden, d.h. proportional zu der an den Ausgangsanschlüssen 18, 19 des Schaltnetzteils 9 abzugebenden Leistung. Dadurch kann nämlich erreicht werden, daß sich im Transformator 14 unabhängig von der vom Schaltnetzteil 9 zu übertragenden Leistung immer die gleichen maximalen Stromwerte ergeben, was für die Dimensionierung des Transformators 14 und auch der mit ihm verbundenen Elemente günstig ist. Auch kann die zweite Frequenz über die Halbwellen der gleichgerichteten Spannung an den Anschlüssen 4, 5, d.h. über die Halbwellen bei der ersten Frequenz, derart moduliert werden, daß zur Unterdrückung geleiteter Funkstörspannungen insgesamt ein kleineres Netzfilter benötigt wird.

Wird die Dimensionierung der Schaltungsanordnung derart gewählt, daß der Strom IL durch die erste Induktivität 6 bereits bis zum Zeitpunkt t2 abgeklungen ist, kann in einer vorteilhaften Abwandlung des Ausführungsbeispiels nach Fig. 1 die dritte Gleichrichteranordnung 27 auch entfallen.

Für eine Begrenzung der an der Schaltvorrichtung 13 auftretenden maximalen Spannungen kann die in Fig. 1 gestrichelt dargestellte Spannungsbegrenzerstufe vorgesehen werden, die parallel zur Schaltvorrichtung angeordnet ist. Diese Spannungsbegrenzerstufe, auch als "voltage clamp" bezeichnet, umfaßt eine Parallelschaltung eines ohmschen Widerstands 28 mit einem Kondensator 30. Diese Parallelschaltung ist in Reihe verbunden mit einer in Durchlaßrichtung angeordneten Diode 29. Derartige Spannungsbegrenzerstufen sind an sich bekannt, so daß auf ihre Funktionsweise hier nicht eingegangen werden muß.

## Patentansprüche

1. Schaltungsanordnung zum Erzeugen wenigstens einer Ausgangsgleichspannung (an 18, 19) aus einer wenigstens weitgehend sinusförmigen Eingangswechselspannung (an 2, 3) einer ersten Frequenz mit
- einer ersten Gleichrichteranordnung (1), der die Eingangswechselspannung (an 2, 3) zuführbar ist und der an einem Gleichspannungsausgang (4, 5) eine gleichgerichtete Spannung entnehmbar ist,
- einer ersten Induktivität (6), einer zweiten Gleichrichteranordnung (7) und einer ersten Siebkapazität (8), die eine in dieser genannten Reihenfolge miteinander verbundene, parallel zum Gleichspannungsausgang (4, 5) angeordnete Reihenschaltung bilden,
- einem Schaltnetzteil (9) mit zwei Eingangsanschlüssen (10, 11), mit denen es parallel zur ersten Siebkapazität (8) angeordnet ist und zwischen denen es eine Reihenschaltung aus einer zweiten Induktivität (12) und einer Schaltvorrichtung (13) aufweist, die mit einer zweiten Frequenz abwechselnd in den leitenden und in den gesperrten Zustand schaltbar ist und von dem die Ausgangsgleichspannung(en) (an 18, 19) abgebbar ist (sind), sowie
- einer Steuerkapazität (23), durch die der Verbindungspunkt (22) zwischen der ersten Induktivität (6) und der zweiten Gleichrichteranordnung (7) mit dem Verbindungspunkt (24) zwischen der zweiten Induktivität (12) und der Schaltvorrichtung (13) verknüpft ist,
wobei die erste Induktivität (6) und die Steuerkapazität (23) derart bemessen sind, daß eine dadurch bestimmte Resonanzfrequenz größer als die zweite Frequenz ist und die letztere groß gegen die erste Frequenz gewählt ist.

2. Schaltungsanordnung nach Anspruch 1,
dadurch gekennzeichnet, daß die Resonanzfrequenz groß gegenüber der zweiten Frequenz gewählt ist.

3. Schaltungsanordnung nach Anspruch 1 oder 2,
dadurch gekennzeichnet, daß die zweite Induktivität (12) als Primärwicklung eines wenigstens eine Sekundärwicklung (15) aufweisenden Transformators (14) ausgebildet ist und daß die Ausgangsgleichspannung(en) (an 18, 19) aus der (den) Sekundärwicklung(en) (15, 21) ableitbar ist (sind).

4. Schaltungsanordnung nach Anspruch 3,
dadurch gekennzeichnet, daß der Transformator (14) als Spartransformator ausgebildet ist.

5. Schaltungsanordnung nach einem der vorhergehenden Ansprüche,
dadurch gekennzeichnet, daß die zweite Frequenz proportional zur mit der (den) Ausgangsgleichspannung(en) (an 18, 19) abgegebenen Leistung einstellbar ist.

6. Schaltungsanordnung nach einem der vorhergehenden Ansprüche,
dadurch gekennzeichnet, daß in die Verbindung zwischen der zweiten Gleichrichteranordnung (7) und der ersten Siebkapazität (8) einerseits und dem zugeordneten Eingangsanschluß (10) des Schaltnetzteils (9) andererseits eine dritte Gleichrichteranordnung (27) mit zur zweiten Gleichrichteranordnung (7) übereinstimmender Stromflußrichtung eingefügt ist.

7. Schaltungsanordnung nach einem der vorhergehenden Ansprüche,
dadurch gekennzeichnet, daß die erste Induktivität 6) so klein dimensioniert ist, daß ein beim Einschalten der Schaltvorrichtung (13) einsetzender Strom (IL) durch die erste Induktivität (6) bereits vor dem Wiederabschalten der Schaltvorrichtung (13) bei deren Betrieb mit einem Wert für die zweite Frequenz, auf den diese für die zur Abgabe mit der (den) Ausgangsgleichspannung(en) vorgesehene Leistung einstellbar ist, wieder abgeklungen ist.

8. Schaltungsanordnung nach einem der vorhergehenden Ansprüche,
gekennzeichnet durch eine zur Schaltvorrichtung (13) parallel angeordnete Spannungsbegrenzerstufe (28, 29, 30).
